# EUROPÄISCHE PATENTSCHRIFT

(11) **EP 1 332 438 B1**
(45) Veröffentlichungstag und Bekanntmachung des Hinweises auf die Patenterteilung: **21.11.2007**
(21) Anmeldenummer: 00990519.1
(22) Anmeldetag: 08.12.2000
(51) Int. Cl.: G06F 17/30

(54) **VERFAHREN UND VORRICHTUNG ZUM ÜBERTRAGEN ELEKTRONISCHER DATENMENGEN**
METHOD AND DEVICE FOR THE TRANSFER OF ELECTRONIC DATA VOLUMES
PROCEDE ET DISPOSITIF POUR LA TRANSMISSION DE FLUX DE DONNEES ELECTRONIQUES

(30) Priorität: 10.12.1999 DE 19959639; 27.11.2000 DE 10058835
(43) Veröffentlichungstag der Anmeldung: 06.08.2003
(73) Patentinhaber: Webpay International AG, 6301 Zug (CH)
(72) Erfinder: Stangl, Norbert, Firstgate Internet AG, 50670 Köln (DE)
(74) Vertreter: Liesegang, Eva
(86) Internationale Anmeldenummer: PCT/DE2000/004404
(87) Internationale Veröffentlichungsnummer: WO 2001/042946

(56) Entgegenhaltungen:
- EP-A- 0 748 095
- EP-A- 0 801 487
- EP-A- 0 869 652
- EP-A- 0 940 960
- WO-A-96/42041
- ARUN IYENGAR: "Dynamic Argument Embedding: Preserving State on the World Wide Web" IEEE INTERNET COMPUTING, IEEE SERVICE CENTER, PISCATAWAY, NJ, US, 1. März 1997 (1997-03-01), Seiten 50-56, XP002164484 ISSN: 1089-7801

## Beschreibung

Die Erfindung liegt auf dem Gebiet der Übertragung elektronischer Datenmengen zwischen einer Anbieter-Servereinrichtung und einem Benutzer-Computer in einem Computernetzwerk, insbesondere dem Internet.

Im Internet ist eine Vielzahl verschiedener Informationen für beliebige Benutzer abrufbar. Die abrufbaren Informationen, welche von verschiedenen Anbietern zur Verfügung gestellt werden, sind hierbei auf sogenannten Servereinrichtungen der Anbieter oder anderer Dienstleister als gespeicherte elektronische Datenmengen abgelegt. Mit Hilfe eines Providers, welcher einem Benutzer einen Zugang zum Internet zur Verfügung stellt, kann der Benutzer mittels eines Benutzer-Computers die gespeicherten Informationen abrufen. Zur Handhabung des Abrufs der Informationen ist auf dem Benutzer-Computer eine Browsereinrichtung installiert.

Die meisten der auf Anbieter-Servereinrichtungen des Internets gespeicherten Informationen sind für den Benutzer kostenlos abrufbar. Es sind im Internet jedoch auch Informationsangebote verfügbar, die für den Benutzer kostenpflichtig sind, d.h. der Benutzer muß für das Abrufen derartiger Informationen eine Gebühr zahlen. Ein wesentliches, hierbei zu lösendes Problem besteht darin, eine genaue und auf die Informationsmenge zugeschnittene Abrechnung der Gebührenpflicht durchzuführen.

Bei einem bekannten Verfahren zum kostenpflichtigen Abrufen von Informationen aus dem Internet wird der Benutzer, der auf die kostenpflichtige Information zugreifen will, mit Hilfe einer Anzeigeseite, die mittels der Browsereinrichtung des Benutzer-Computers angezeigt wird, darauf aufmerksam gemacht, daß er für den Abruf der von ihm gewünschten Information eine Gebühr zu zahlen hat. Um auf die kostenpflichtige Information anschließend zugreifen zu können, muß der Benutzer zunächst die bestehende Datenverbindung zwischen dem Benutzer-Computer und den Serviceeinrichtungen des Providers unterbrechen. Dieses bedeutet, daß die Datenverbindung mit dem Provider des Benutzers abgewählt wird. Anschließend erfolgt der Aufbau einer neuen Datenverbindung zwischen dem Benutzer-Computer und einem anderen Provider mittels des Anwählens einer neuen Telefonnummer. Diese Telefonnummer wurde dem Benutzer auf der Anzeigeseite mitgeteilt, auf welcher über die Gebührenpflicht informiert wurde. Anschließend kann der Benutzer über die neuangewählte Datenleitung die gebührenpflichtige Information aus dem Internet abrufen.

Das bekannte Verfahren hat den Nachteil, daß das Ab- und Anwählen einer Datenleitung zu zeitaufwendigen Ab- und Einwahlprozeduren führt. Möchte der Benutzer zwischen dem Abruf kostenloser und kostenpflichtiger Informationen hin- und herspringen, so bedeutet dies mehrfaches Ab- und Einwählen.

Das Dokument WO 96/42041 beschreibt ein Verfahren, mit welchem ein Benutzer-Computer (client) von einer Anbieter-Servereinrichtung (content server) Daten anfordern kann. Hierbei erhält die Anbieter-Servereinrichtung von dem Benutzer-Computer eine Anfrage, welche Benutzerdaten umfaßt. Mittels der Benutzerdaten findet in der Anbieter-Servereinrichtung eine Authentifizierung des Benutzers statt, woraufhin, bei erfolgreicher Authentifizierung des Benutzers, die angefragten Daten an den Benutzer-Computer übermittelt werden.

Das Dokument "Dynamic Argument Embedding: Preserving State on the World Wide Web"; Arun Iyengar; IEEE Internet Computing; IEEE Service Center, Piscataway, N.J., U.S., 1. März 1997, Seiten 50-56, beschreibt ein Verfahren zum Beibehalten eines Zustands während einer http-Sitzung. Hierzu werden Datenmengenadressen in Hyperlink-Elementen, welche sich in einer vom Benutzer angeforderten Datenmenge befinden, so umschrieben, daß sie kodierte Zustands-Informationen umfassen. Die umgeschriebenen Datenmengenadressen verweisen ferner auf ein Programm-Modul, welches die kodierten Zustands-Informationen verarbeiten kann.

Aufgabe der Erfindung ist es, ein verbessertes Verfahren zum Übertragen elektronischer Datenmengen zwischen einer Anbieter-Servereinrichtung und einem Benutzer-Computer zu schaffen, bei dem die Nachteile des Standes der Technik überwunden sind.

Diese Aufgabe wird erfindungsgemäß durch ein Verfahren gemäß Anspruch 1 gelöst.

Die Erfindung umfaßt den wesentlichen Gedanken, das Übertragen der elektronischen Datenmenge zwischen der Anbieter-Servereinrichtung und dem Benutzer-Computer unter Zwischenschaltung einer Servereinrichtung auszuführen, die vorzugsweise auf der sogenannten Proxy-Technologie basiert. Auf diese Weise ist es mit Hilfe der Servereinrichtung möglich, den Datenfluß von der Anbieter-Servereinrichtung zu dem Benutzer-Computer hinsichtlich des Umfangs sowie der für den Datenfluß benötigten Zeitdauer zu kontrollieren. Hierdurch ist eine Möglichkeit geschaffen, die Übertragung kostenpflichtiger Informationen von der Anbieter-Servereinrichtung zu dem Benutzer-Computer zu überwachen und eine genaue Abrechnung zu erstellen.

Hierbei stellt der Benutzer des Benutzer-Computers zunächst eine Benutzeranforderung zum Abruf der elektronischen Datenmenge an die Anbieter-Servereinrichtung. Die Anbieter-Servereinrichtung erkennt automatisch, daß es sich bei der Benutzeranforderung um eine Anfrage nach kostenpflichtiger Information handelt und leitet die Benutzeranforderung deshalb an die Servereinrichtung weiter. Die weiteren Schritte zur Übertragung der elektronischen Datenmenge zu dem Benutzer-Computer werden dann von der Servereinrichtung initiiert und gesteuert. Hieraus folgt, daß der anschließende elektronische Dataenaustausch, soweit der Benutzer-Computer hierbei einbezogen wird, zwischen der Servereinrichtung und dem Benutzer-Computer stattfindet. Die Servereinrichtung ruft die vom Benutzer gewünschten kostenpflichtigen, elektronischen Datenmengen von der Anbieter-Servereinrichtung ab und übermittelt sie nach einer Bearbeitung an den Benutzer-Computer.

Bei der erfindungsgemäßen Lösung ist kein mehrmaliges Ab- und Anwählen einer Datenleitung notwendig, wenn der Benutzer zwischen kostenlosen und kostenpflichtigen abrufbaren Datenmengen wechselt. Auf diese Weise wird die Benutzerfreundlichkeit verbessert.

Ein wesentlicher Vorteil der Erfindung besteht darin, daß sowohl der Benutzer auf dem Benutzer-Computer als auch der Anbieter auf der Anbieter-Servereinrichtung keine zusätzliche Software installieren müssen, so daß der Implementierungsaufwand und die Kosten gering sind, die im Zusammenhang mit der Einbindung des Benutzer-Computers als auch der Anbieter-Servereinrichtung in eine Vorrichtung bzw. ein System zum Ausführen des neuen Verfahrens entstehen.

Darüber hinaus handelt es sich bei dem Verfahren und der Vorrichtung zum Übertragen elektronischer Datenmengen, die über das Internet abrufbar sind, um eine nach dem sogenannten Proxy-Prinzip arbeitende und vollständig internetbasierte Lösung.

Des weiteren muß der Anbieter bei Nutzung der erfindungsgemäßen Lösung nicht zwei Internetpräsenzen anlegen und pflegen, wie es in Verbindung mit der eingangs beschriebenen, bekannten Lösung zum kostenpflichtigen Abruf von elektronischen Datenmengen der Fall ist. Bei der bekannten Lösung muß der Anbieter für eine Internetpräsenz sowohl eine Datenmenge auf dem eigenen Server als auch eine Datenmenge auf dem Server pflegen, auf dem sich der Benutzer nach der Unterbrechung seiner bestehenden Datenleitung neu einwählen muß. Mit Hilfe des neuen Verfahrens und der neuen Vorrichtung werden deshalb Speicherkapazitäten eingespart. Weiterhin entfällt Wartungsaufwand für zeitlich begrenzte Aktualisierungen.

Um zu verhindern, daß der Benutzer Kenntnis von der Datenmengenadresse erlangt, die zu der von dem Benutzer gewünschten elektronischen Datenmenge gehört, sieht eine zweckmä-ßige Weiterbildung der Erfindung vor, daß in der Servereinrichtung vor dem Übermitteln der elektronischen Datenmenge von der Servereinrichtung zum Benutzer-Computer eine temporäre Verbindungsadresse für das Verzeichnis automatisch erzeugt und der elektronischen Datenmenge zugeordnet wird, so daß die elektronische Datenmenge mit einer elektronisch umgeschriebenen Datenmengenadresse, die die temporäre Verbindungsadresse umfaßt, an den Benutzer-Computer übermittelt wird. Wenn der Benutzer die Datenmengenadresse nicht kennt, kann er nicht unter Umgehung der Kostenpflicht des Abrufs der elektronischen Datenmenge auf diese zugreifen.

Eine zweckmäßige Ausgestaltung der Erfindung sieht vor, daß die temporäre Verbindungsadresse einen temporären, der aktuellen Freischaltung elektronisch zugeordneten Parameter umfaßt, wodurch auf einfache Weise eine verbesserte Möglichkeit zur Erfassung und Abrechnung der kostenpflichtig abgerufenen elektronischen Datenmengen geschaffen ist.

Eine Möglichkeit zur zeitlichen Begrenzung des kostenpflichtigen Abrufs der elektronischen Datenmenge ist bei einer bevorzugten Ausgestaltung der Erfindung dadurch gebildet, daß das elektronische Speichern der aktuellen Freischaltung auf einen vorbestimmten Zeitraum begrenzt ist.

Zur Sicherstellung eines Einverständnisses des Benutzers mit der Zahlungspflicht beim Abruf kostenpflichtiger, elektronischer Datenmengen sieht eine vorteilhafte Weiterbildung die folgenden Verfahrensschritte vor:
- automatisches Anfordern einer Benutzereingabe zur elektronischen Erfassung einer Zahlungsbereitschaft mit Hilfe der Servereinrichtung und des Benutzercomputers, wenn beim elektronischen Verarbeiten der erfaßten Benutzerdaten und der Information über die elektronisch erfaßte Benutzeranforderung gemäß eines früheren Verfahrensschritt festgestellt wird, daß in der Servereinrichtung für den mittels der erfaßten Benutzerdaten authentifizierten Benutzer keine Information über die aktuelle Freischaltung für das elektronische Verzeichnis elektronisch gespeichert ist; und
- elektronisches Erfassen und Verarbeiten der angeforderten Benutzereingabe, derart, daß ein dem Benutzer zugeordneter elektronischer Kontostand automatisch angepaßt und die Information über die aktuelle Freischaltung für das elektronische Verzeichnis in der Servereinrichtung gespeichert wird.

Um die Zeit vor dem tatsächlichen Zugriff des Benutzers auf kostenpflichtige, elektronische Datenmengen, insbesondere beim mehrfachen Zugriff auf die gleiche Datenmenge, zu vermindern, kann eine zweckmäßige Ausgestaltung der Erfindung vorsehen, daß nach dem Authentifizieren des Benutzers gemäß eines früheren Verfahrensschritt eine temporäre Identifizierungsdatei mittels der Servereinrichtung elektronisch erzeugt und nach dem Übermitteln an den Benutzer-Computer in einer Speichereinrichtung des Benutzer-Computers gespeichert wird, und daß die temporäre Identifizierungsdatei nach einer von dem Benutzer mittels der Browsereinrichtung auf dem Benutzer-Computer erzeugten, erneuten Benutzeranforderung zum Abruf der elektronischen Datenmenge oder einer anderen elektronischen Datenmenge aus dem elektronischen Verzeichnis in der Anbieter-Servereinrichtung für ein erneutes, kein Anfordern und kein Erfassen der Benutzerdaten umfassendes Authentifizieren des Benutzers elektronisch ausgewertet wird.

Zur Verbesserung der Benutzerferundlichkeit, insbesondere der Transparenz des Verfahrens aus Sicht des Benutzers, sieht eine vorteilhafte Fortbildung der Erfindung vor, daß nach dem erneuten Authentifizieren und einem hiernach eines früheren Verfahrensschritt entsprechend ausgeführten, erneuten Autorisieren mittels der Servereinrichtung eine verbleibende Zeitdauer der aktuellen Freischaltung automatisch ermittelt wird sowie eine Information über die verbleibende Zeitdauer elektronisch erzeugt und an den Benutzer-Computer zur Ausgabe übertragen wird. Auf diese Weise wird der Benutzer vor dem erneuten Abruf einer kostenpflichtigen elektronischen Datenmenge über die verbleibende Zeit informiert, in der die kostenpflichtige elektronische Datenmenge zur Verfügung steht.

Zur Vermeidung eines unnötigen Speicherbedarfs kann eine bevorzugte Ausgestaltung der Erfindung vorsehen, daß die temporäre Identifizierungsdatei nach einem Schließen der Browsereinrichtung auf dem Benutzer-Computer aus der Speichereinrichtung automatisch gelöscht wird. Hierdurch wird insbesondere der Hauptspeicher des Benutzer-Computers entlastet. Darüber hinaus erfolgt die Löschung der temporären Identifizierungsdatei zur Gewährleistung zusätzlicher Sicherheitsaspekte.

Um auch in Verbindung mit verschachtelten, elektronischen Datenmengen, die mit Hilfe von Hyperlinks miteinander verbunden sind, eine genaue und fehlerlose Abrechnung kostenpflichtiger elektronischer Datenmengen zu gewährleisten, kann das Verfahren die folgenden Verfahrensschritte umfassen:
- syntaktisches Analysieren der elektronischen Datenmenge mittels der Servereinrichtung, um Hyperlink-Elemente elektronisch zu erfassen, die von der elektronischen Datenmenge umfaßt sind und die jeweils eine andere Datenmengenadresse aufweisen, die auf eine zugehörige Datenmenge in dem Netzwerk, insbesondere in der Anbieter-Servereinrichtung verweisen;
- elektronisches Umschreiben der Datenmengenadresse eines der erfaßten Hyperlink-Elemente vor dem Übertragen eines Teils der elektronischen Datenmenge, welcher das eine Hyperlink-Element umfaßt, von der Servereinrichtung zum Benutzer-Computer gemäß eines früheren Verfahrensschritt, wenn beim elektronischen Überprüfen des einen Hyperlink-Elements festgestellt wird, daß die Datenmengenadresse des einen Hyperlink-Element innerhalb des elektronischen Verzeichnisses liegt, wobei das elektronische Umschreiben derart ausgeführt wird, daß eine umgeschriebene Datenmengenadresse des einen Hyperlink-Elements erzeugt wird, die auf die Servereinrichtung verweist; und
- Speichern einer elektronischen Zuordnung zwischen der Datenmengenadresse des einen Hyperlink-Elements und der umgeschriebenen Datenmengenadresse des einen Hyperlink-Elements mittels der Servereinrichtung, so daß bei einer Benutzeranforderung zum Abruf der zur Datenmengenadresse des einen Hyperlink-Element gehörigen Datenmenge eine Übertragung der zugehörigen Datenmenge unter Einbeziehung der Servereinrichtung gewährleistet ist.

Um für den Benutzer Wartezeiten beim Abruf der elektronischen Datenmenge zu minimieren, sieht eine vorteilhafte Weiterbildung der Erfindung vor, daß das syntaktischer Analysieren fliegend ausgeführt wird, während die elektronische Datenmenge wenigstens teilweise von der Anbieter-Servereinrichtung zur Servereinrichtung übertragen wird. Die Erfindung wird im Folgenden anhand von Ausführungsbeispielen unter Bezugnahme auf eine Zeichnung näher erläutert. Hierbei zeigen:
- Figur 1: eine schematische Darstellung eines Netzwerks mit einem Benutzer-Computer, einer Anbieter-Servereinrichtung und einer Servereinrichtung; und
- Figur 2: eine schematische Darstellung von Einrichtungen der Servereinrichtung aus Figur 1.

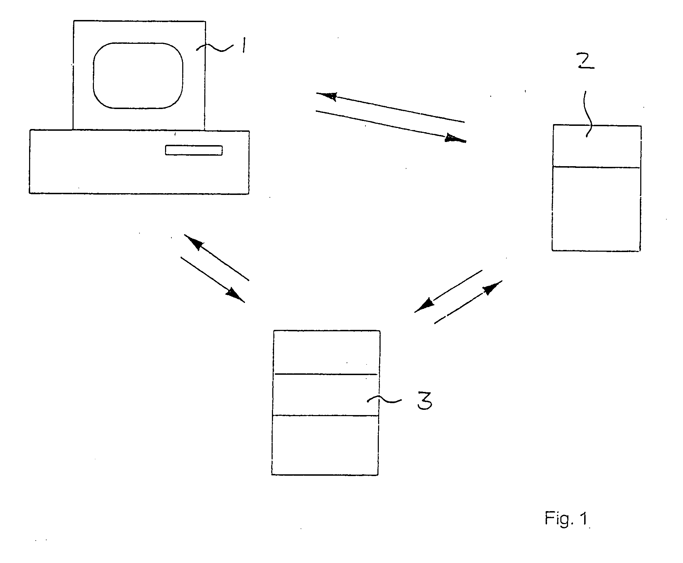

Gemäß Figur 1 können zwischen einem Benutzer-Computer 1, einer Anbieter-Servereinrichtung 2 und einer Servereinrichtung 3 jeweils elektronische Daten ausgetauscht werden. Dieses ist in Figur 1 mit Hilfe von Pfeilen symbolisch dargestellt. Die Anbieter-Servereinrichtung 2 und die Servereinrichtung 3 sind jeweils als Teile eines Computer-Netzwerks ausgebildet, insbesondere als Teile des Internets.

Auf der Anbieter-Servereinrichtung 2 sind elektronische Datenmengen von Anbietern gespeichert, die diese elektronische Datenmengen zum Abruf durch Benutzer, beispielsweise zum Abruf mit Hilfe des Benutzer-Computers 1, zur Verfügung stellen. Die elektronischen Datenmengen sind in der Anbieter-Servereinrichtung 2 in elektronischen Verzeichnissen gespeichert, denen jeweils eine Verbindungsadresse zugeordnet ist. In Verbindung mit dem Internet handelt es sich bei der Verbindungsadresse um einen sogenannten Link. In den Verzeichnissen sind die elektronischen Datenmengen gespeichert, wobei jede der elektronischen Datenmengen unter einem Bezeichner bzw. einem Dateinamen gespeichert ist. Die Verbindungsadresse bildet zusammen mit dem Bezeichner eine zur Datenmenge gehörige Datenmengenadresse. Bei den elektronischen Datenmengen kann es sich um Datenmengen mit beliebigen Datenformaten handeln, beispielsweise um html-Daten, MP3-Dateien, JPEG-Dateien, Skript-Daten, usw. Die elektronischen Datenmengen können Bild-, Text- und/oder Toninformationen umfassen, die mittels des Benutzer-Computers oder anderen Peripherieeinrichtungen ausgegeben werden können.

Der Anbieter kann die von ihm auf der Anbieter-Servereinrichtung 2 zum Abruf gespeicherten, elektronischen Datenmengen kostenlos oder kostenpflichtig zur Verfügung stellen. Beabsichtigt der Anbieter, eine elektronische Datenmenge kostenpflichtig abzugeben, so muß er sich zunächst beim Betreiber der Servereinrichtung 3 registrieren. Dieses kann per Telefon, über das Internet oder schriftlich geschehen. Hierbei muß der Anbieter persönliche und/oder firmenspezifische Informationen, wie Name, Firma, Bankverbindung usw. angeben.

In einem nächsten Schritt kann der Anbieter festlegen, welche von ihm zur Verfügung gestellten Datenmengen kostenpflichtig sein sollen. Zu diesem Zweck stehen dem Anbieter in einer Benutzeroberfläche, welche dem Anbieter auf einem mit der Servereinrichtung 3 verbunden Anbieter-Computer (nicht dargestellt) angezeigt wird, Tabellen zur Verfügung, in die der Benutzer zuerst die verschiedenen zu bepreisenden bzw. kostenpflichtigen, elektronischen Verzeichnisse/Bereiche mit Hilfe der zugehörigen Verbindungsadresse (Link - URL-Adresse) einträgt. Anschließend generiert die Servereinrichtung 3 für die vom Anbieter angegebenen Verbindungsadressen neue Verbindungsadressen, die dem Anbieter vorzugsweise mit Hilfe des Anbieter-Computers über die Servereinrichtung 3 mitgeteilt werden. Der Anbieter muß dann die ihm mitgeteilten neuen Verbindungsadressen anstelle der Verbindungsadressen in die vom Anbieter benannten Verzeichnisse mit den kostenpflichtigen Datenmengen eintragen, die auf der Anbieter-Servereinrichtung 2 gespeichert sind.

Nachdem der Anbieter den zweiten Schritt der Registrierung ausgeführt hat, sind Verzeichnisse auf der Anbieter-Servereinrichtung 2, in denen kostenpflichtige Datenmengen gespeichert sind, mit einer Verbindungsadresse (einem Link) versehen, die dazu führt, daß beim Versuch des Benutzers mit Hilfe des Benutzer-Computers 1 Datenmengen aus diesen Verzeichnissen abzurufen, eine Weiterleitung der Benutzeranforderung an die Servereinrichtung 3 erfolgt. Hierbei weisen die von der Servereinrichtung 3 erzeugten, dem Anbieter mitgeteilten und vom Anbieter eingefügten neuen Verbindungsadressen beispielsweise das folgende Format auf: "http://www.premium-link.net/$LN$0$/Datenmenge.html" bzw. "http://LN.O.premium-link.net" oder "http://LN.O.premium-link.net/Datenmenge.html.". Diese neue Datenmengenadresse, welche von der neuen Verbindungsadresse "http://www.premium-link/$LN$0$" und dem Bezeichner der Datenmenge "Datenmenge.html" gebildet wird, wurde für die ursprüngliche Datenmengenadresse des Anbieters "http://www.Anbieter.com/Aktuell/Datenmenge.html" erzeugt, nachdem der Anbieter angegeben hat, daß Datenmengen, beispielsweise die Datenmenge "Datenmenge.html", die in dem zu dieser Verbindungsadresse "http://www.Anbieter.com/Aktuell" gehörenden Verzeichnis gespeichert sind, kostenpflichtig abrufbar sein sollen.

Mit Hilfe der beispielhaft gewählten Einfügung "premium-link.net" erfolgt die Weiterleitung der Benutzeranforderung von der Anbieter-Servereinrichtung 2 an die Servereinrichtung 3, die in diesem Fall anhand der Bezeichnung "premium-link.net" elektronisch identifizierbar ist. Wesentlich ist hierbei, daß die eingefügte, neue Verbindungsadresse eine Weiterleitung der Benutzeranforderung von der Anbieter-Servereinrichtung 2 zur Servereinrichtung 3 gewährleistet. Die Einfügung "LN" steht für "Linknummer" und ist eine der jeweiligen Verbindungsadresse bzw. dem jeweiligen Link des Anbieters zugeordnete Ziffer, wobei diese Ziffern vorzugsweise fortlaufend vergeben werden. Die Einfügung "0" dient der Kennzeichnung, derart, daß es sich um eine neue Benutzeranforderung handelt. Mit Hilfe der Einfügung "0" erkennt die Servereinrichtung 3, daß es sich bei der weitergeleiteten Benutzeranforderung um eine noch nicht bearbeitete Anforderung handelt. Nach diesen Einfügungen folgt mit "Datenmenge.html" der Teil der ursprünglichen Datenmengenadresse der Datenmenge "Datenmenge.html", der unverändert übernommen wurde.

Ein Crawler-Modul überprüft automatisch die Funktionalität der neuen Verbindungsadressen (Links).

Zu jedem angegebenen Verzeichnis, welches kostenpflichtig sein soll, muß der Anbieter in dem mit Hilfe des Benutzer-Computers ausgegebenen Menü ein Beschreibungsfeld ausfüllen und eine Klassifizierung durchführen. Diese Informationen des Anbieters können beispielsweise für statistische Zwecke automatisch ausgewertet werden.

Nach dem der Anbieter ein Verzeichnis als kostenpflichtig festgelegt hat, kann der Anbieter innerhalb dieses Verzeichnisses ein zu diesem Verzeichnis untergeordnetes Verzeichnis als kostentpflichtig festlegen. Zu diesem Zweck trägt der Anbieter das untergeordnete Verzeichnis in der zur Verfügung gestellten Benutzeroberfläche ein. Die Servereinrichtung 3 erzeugt dann auch für das untergeordnete Verzeichnis in der oben beschriebenen Weise eine weitere neue Verbindungsadresse, welche der Anbieter anstelle der ursprüngliche Verbindungsadresse des untergeordneten Verzeichnisses in seine gespeicherten Informationen auf der Anbieter-Servereinrichtung 2 übernehmen muß.

Es kann auch vorgesehen sein, daß die zu bepreisende, d.h. kostenpflichtig abrufbare Information nur eine Datenmenge umfaßt, beispielsweise die Datei "Beispiel.html", welcher die Datenmengenadresse "http://www. Anbieter.com/Beipiel.html" zugeordnet ist. In diesem Fall wird von der Servereinrichtung 3 im Rahmen der Anbieterinstallation die neue Datenmengenadresse "http://www.premium-link.net/$LN$0$Beispiel.html" oder "http://LN.O.premium-link.net/Beispiel.html." erzeugt. Die Datenmenge "Beispiel.html" kann auch als Teil eines Verzeichnisses ausgebildet sein, für welches bereits eine Kostenpflicht in der oben beschriebenen Art festgelegt wurde.

Der Anbieter muß im Rahmen der Festlegung der zu bepreisenden/kostenpflichtigen Verzeichnisse zwischen verschiedenen Tarifierungsmodellen auswählen, deren Einhaltung beim Abruf der Datenmengen des Anbieters durch den Benutzer mittels der Servereinrichtung 3 automatisch überprüft wird. Nach der Eingabe des vom Anbieter gewünschten Tarifierungsmodells ist die Einrichtung der kostenpflichtig abzurufenden Datenmengen des Anbieters abgeschlossen.

Das Einrichtungsverfahren zum Festlegen der kostpflichtigen Informationen kann mit Hilfe einer sogenannten "Webcrawlereinrichtung" vereinfacht werden, derart, daß der Anbieter die Verbindungsadressen, der als kostenpflichtig festzulegenden Verzeichnisse nicht eingeben muß, sondern diese von der "Webcrawlereinrichtung" automatisch eingelesen werden.

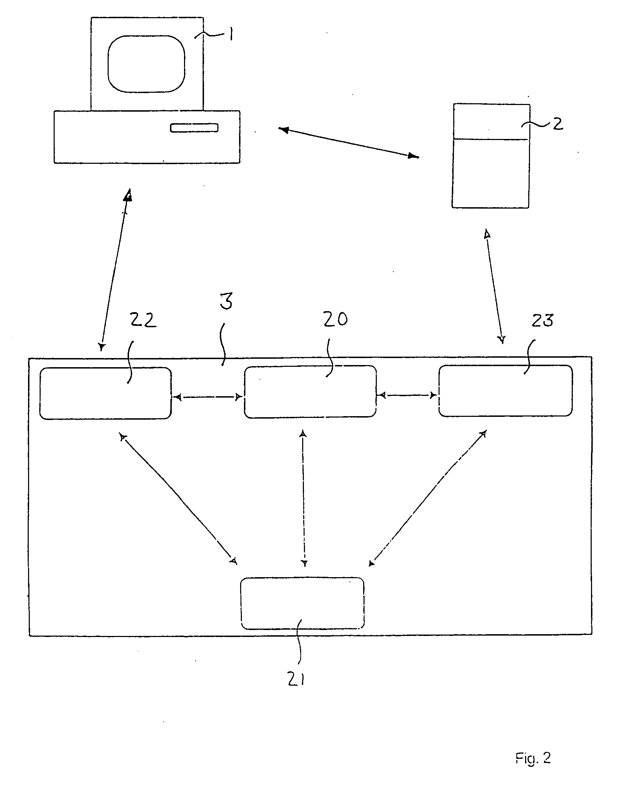

Zur weiteren Beschreibung wird im Folgenden auch auf Figur 2 Bezug genommen, die neben dem Benutzer-Computer 1 und der Anbieter-Servereinrichtung 2 eine schematische Darstellung einzelner Einrichtungen der Servereinrichtung 3 zeigt. Es wird angenommen, daß der Benutzer-Computer 1 eine Benutzeranforderung zum Abruf einer Datenmenge von der Anbieter-Servereinrichtung 2 stellt. Diese Benutzeranforderung wird aufgrund der vom Anbieter eingefügten neuen Verbindungsadressen/Datenmengenadressen automatisch von der Anbieter-Servereinrichtung 2 an die Servereinrichtung 3 weitergeleitet. Die von der Servereinrichtung 3 empfangene Information über die Benutzeranfrage zum Abruf der Datenmenge wird zunächst einer Sitzungsverwaltung 20 zugeleitet. Mit Hilfe der Sitzungsverwaltung 20 wird eine Zwischenseite mit Informationen erzeugt, an den Benutzer-Computer 1 übermittelt und über den Bildschirm des Benutzer-Computers ausgegeben. Auf der Zwischenseite wird der Benutzer über die grundsätzliche Kostenpflicht in Verbindung mit der von ihm angeforderten Datenmenge informiert. Darüber hinaus kann die Zwischenseite weiter Informationen über die Art und den Umfang der Kostenpflicht umfassen.

Anhand der Einfügung "0" in der Verbindungsadresse/Datenmengenadresse der angeforderten Datenmenge erkennt die Sitzungsverwaltung 20. daß es sich um eine neue, von der Servereinrichtung 3 noch nicht bearbeitete Benutzeranfrage handelt. Es erfolgt dann eine Information hierüber an einen Sitzungsmanager 21. Der Sitzungsmanager 21 initiiert einen Prozeß zur automatischen Authentifizierung des Benutzers, welcher die empfangene Benutzeranforderung mit Hilfe des Benutzer-Computers 1 und einer hierauf installierten Browsereinrichtung ausgelöst hat. Zu diesem Zweck erzeugt der Sitzungsmanager 21 Anforderungen, die an den Benutzer-Computer 1 übermittelt werden und vom Benutzer bestimmte Benutzereingaben einfordern. Hierzu gehört eine Anfrage dahingehend, ob der Benutzer in der Servereinrichtung 3 bereits als Benutzer des Verfahrens zum kostenpflichtigen Abrufen elektronischer Datenmengen von der Anbieter-Servereinrichtung 2 registriert ist. Darüber hinaus werden eine Benutzerkennung und ein Paßwort von dem Benutzer abgefragt. Der zur Authentifizierung notwendige Datenaustausch zwischen der Servereinrichtung 3 und dem Benutzer-Computer 1 erfolgt wenigstens teilweise unter Einbeziehung einer Benutzerdatenbank 22 (vgl. Figur 2). Zur automatischen Überprüfung der vom Benutzer zur Authentifizierung eingegebenen und elektronisch erfaßten Benutzerangaben werden in der Benutzerdatenbank 22 gespeicherte Daten verwendet.

Wenn der Benutzer erfolgreich authentifiziert wurde, ist in einem nächsten Schritt zu prüfen, ob der authentifizierte Benutzer zum Abruf der von dem Benutzer angeforderten elektronischen Datenmenge autorisiert ist. Dieses bedeutet, daß von dem Sitzungsmanager 21 nach einem Aufruf von der Sitzungsverwaltung 20 automatisch geprüft wird, ob für das mit Hilfe der Einfügung "LN" in der Verbindungsadresse gekennzeichnete Verzeichnis bzw. die mit Hilfe der Einfügung "LN" in der Datenmengenadresse gekennzeichnete Datenmenge eine aktuelle Freischaltung für den authentifizierten Benutzer existiert. Zu diesem Zweck greift der Sitzungsmanager 21 auf gespeicherte Freischaltedaten zu. Die Freischaltedaten umfassen Informationen über zu bestimmten Zeitpunkten vorhandene Freischaltungen bzw. Sitzungen. Bei einer Freischaltung bzw. Sitzung handelt es sich um eine gültige elektronische Zuordnung zwischen einer Verbindungsadresse/Datenmengenadresse und einem authentifizierten Benutzer. Die Freischaltungen existieren jeweils für einen vorbestimmten Zeitraum, nachdem der Benutzer auf eine Abfrage, die mit Hilfe des Sitzungsmanagers 21 erzeugt wird und an den Benutzer-Computer 1 übermittelt wird, sein Einverständnis erklärt hat. Dieses Einverständnis des Benutzers hat zur Folge, daß ein dem Benutzer elektronisch zugeordneter Kontostand, der vorzugsweise in der Benutzerdatenbank 22 gespeichert ist, um eine für die Freischaltung zu zahlende Gebühr erhöht wird und eine Freischaltung für das vom Benutzer gewünschte Verzeichnis erzeugt und elektronisch gespeichert wird.

Bei der bisher beschriebenen Ausführungsform wurde die Authentifizierung des Benutzers mit Hilfe der automatischen Abfrage, elektronischen Erfassung und automatischen Überprüfung einer Benutzereingabe ausgeführt. Es kann jedoch auch vorgesehen sein, daß der Benutzer anhand eines elektronischen Zertifikats authentifiziert wird. Das elektronische Zertifikat kann als Identifizierungsdatei im Speicher des Benutzer-Computers 1, insbesondere dem Hauptspeicher, gespeichert sein (sogenanntes temporäres "Cookie") oder als ein Browserzertifikat der auf dem Benutzer-Computer 1 installierten Browsereinrichtung ausgebildet sein. Die Identifizierungsdatei wird auf dem Benutzer-Computer 1 gespeichert, nachdem der Benutzer die Browsereinrichtung auf dem Benutzer-Computer 1 gestartet hat, d.h. ein die Browsereinrichtung ausbildendes Computerprogramm wurde gestartet, und sich in Verbindung mit dem Abruf kostenpflichtiger Datenmengen authentifiziert hat. Die Identifizierungsdatei bleibt dann auf dem Benutzer-Computer 1 so lange gespeichert, bis die Browsereinrichtung geschlossen wird. Beim Schließen der Browsereinrichtung wird die Identifizierungsdatei automatisch aus dem Benutzer-Computer 1 gelöscht. Während der Zeitdauer, in welcher die Identifizierungsdatei auf dem Benutzer-Computer 1 gespeichert ist, wird die Identifizierungsdatei von der Servereinrichtung 3 im Rahmen des Authentifizierungsprozesses des Benutzers automatisch gesucht und hinsichtlich umfaßter Autorisierungsdaten ausgewertet.

Im Gegensatz zur Identifizierungsdatei wird das Browserzertifikat so in die Browsereinrichtung integriert, daß das Browserzertifikat auch nach dem Schließen der Browsereinrichtung und deren wiederholtem Öffnen für die Autorisierung des Benutzers zur Verfügung steht. Die permanente Integration des Browserzertifikats erfolgt, nachdem der Benutzer sich erstmalig für den kostenpflichtigen Abruf von Datenmengen von der Anbieter-Servereinrichtung 2 registriert hat.

Nachdem die Authentifizierung des Benutzers mittels der Benutzereingabe, der Identifizierungsdatei oder des Browserzertifikats elektronisch ermittelt wurde, kann die vom Benutzer gewünschte elektronische Datenmenge von der Anbieter-Servereinrichtung 2 über die Servereinrichtung 3 zu dem Benutzer-Computer 1 übertragen werden. Dieses erfolgt jedoch erst nach anschließender Autorisierung des Benutzers.

Beim Abruf der vom Benutzer angeforderten Datenmenge von der Anbieter-Servereinrichtung 2 über die Servereinrichtung 3 kann die Datenmenge von der Servereinrichtung 3 nicht unverändert zum Benutzer-Computer 1 weitergeleitet werden. Es erfolgt eine Bearbeitung der Datenmenge mit Hilfe einer Umschreibeeinrichtung 23, die als "Rewrite-Engine" bezeichnet werden kann (vgl. Figur 2). Zum einen muß die Beschreibung der Datenmenge, insbesondere ein sogenannter Kopf (http - Header) abgeändert werden, um Informationen heraus zu filtern, die speziell die Verbindung zwischen der Anbieter-Servereinrichtung 2 und der Servereinrichtung 3 betreffen. Der Kopf der zu übertragenden Datenmenge kann außerdem zusätzliche Referenzen auf die Anbieter-Servereinrichtung 2 enthalten, die dort technisch bedingt eingefügt werden. Darüber hinaus kann der Kopf Steuerungsinformationen enthalten, die nur in veränderter Form zum Benutzer weiterzugeben sind, beispielsweise eine Mitteilung über den Umzug einer Datenmenge zu einer neuen Verbindungsadresse (http - Redirect). Um diese Kopf-Informationen dem Standard entsprechend erfassen zu können, arbeitet ein Einweg-Parser in der Servereinrichtung 3 diese Informationen sequentiell ab und übergibt sie einer getrennten Funktion. Dort werden die technisch nicht notwendigen Daten entfernt.

Nach dem Kopf der Datenmenge folgt ein Datenteil, dessen Typ im Kopf festgelegt ist. Der Datenteil kann dem jeweiligen Standard entsprechende Referenzen umfassen, die auf andere Verzeichnisse und/oder Datenmengen auf der Anbieter-Servereinrichtung 2 verweisen. In html-Datenmengen/Dokumenten sind dies beispielsweise sogenannte Hyperlinks bzw. Hyperlink-Elemente. Ruft der Benutzer des Benutzer-Computers 1 Datenmengen ab, die innerhalb eines vom Anbieter als kostenpflichtig festgelegten bzw. installierten Verzeichnisses liegen, so müssen die von diesen Datenmengen umfaßten Referenzen, insbesondere Hyperlink-Elemente mit Hilfe der Umschreibeeinrichtung 23 umgeschrieben werden, bevor die Datenmengen von der Servereinrichtung 3 an den Benutzer-Computer 1 weiter geleitet werden. Die umfaßten Hyperlink-Elemente können selbst wieder auf andere Verzeichnisse verweisen, die der Kostenpflicht unterliegen sollen. Zweck der Umschreibung ist es deshalb, zu verhindern, daß der Benutzer über ein Hyperlink-Element in der von ihm abgerufenen Datenmenge unter Umgehung der Kostenpflicht auf die anderen Verzeichnisse zugreifen kann, d.h. die dort gespeicherten Datenmengen kostenlos abrufen kann. Die Hyperlink-Elemente müssen deshalb so neutralisiert werden, daß der Benutzer die tatsächliche, hinter dem Hyperlink-Element stehende Verbindungsadresse nicht erkennen kann. Verweist das Hyperlink-Element auf ein kostenpflichtiges Verzeichnis, so ist das Hyperlink-Element im Rahmen der automatischen Umschreibung durch die Verbindungs-/Datenmengenadresse zu ersetzen, die bei der Festlegung des kostenpflichtigen Verzeichnisses/der kostenpflichtigen Datenmenge durch den Anbieter mit Hilfe der Servereinrichtung 3 erzeugt wurde (vgl. oben).

Zur weiteren Absicherung gegen den mißbräuchlichen, kostenlosen Abruf kostenpflichtiger Datenmengen ist auf der Anbieter-Servereinrichtung 2 ein Modul bzw. eine Referenzdatei abgelegt, welche bei jedem elektronisch erfaßten Zugriff auf die kostenpflichtigen Datenmengen automatisch überprüft, ob der Zugriff durch die Servereinrichtung 3 erfolgt. Ist dieses nicht der Fall, so wird der Zugriff verhindert. Da kostenpflichtige Datenmengen, wie oben beschrieben, beim Abruf mittels des Benutzer-Computers 1 zunächst stets mittels der Servereinrichtung 3 von der Anbieter-Servereinrichtung 2 abgerufen und anschließend von der Servereinrichtung 3 zum Benutzer-Computer 1 übermittelt werden, ist auf diese Weise ein wirksamer Mißbrauchsschutz gebildet.

Handelt es sich bei dem Hyperlink-Element um einen Verweis auf kostenlos abrufbare Informationen/Datenmengen, so wird dieses Hyperlink-Element nicht verändert bzw. umgeschrieben.

Um das notwendige Anpassen der Hyperlink-Elemente auszuführen, ist eine dreistufige Bearbeitung des Datenteils der Datenmenge mit drei von der Umschreibeeinrichtung 23 umfaßten Parser-Einrichtungen vorgesehen, sofern der Datenteil einem der bekannten Datentypen entspricht. In einem ersten Schritt muß die Struktur der Daten des Datenteils aufgetrennt und in Referenzen (Hyperlink-Elemente) und sonstige Informationen zerlegt werden. In einem zweiten Schritt werden die elektronisch erfaßten Referenzen in der Servereinrichtung 3 mittels einer Sortiereinrichtung klassifiziert und sortiert, um Verweise auf kostenpflichtige Verzeichnisse/Datenmengen, die nach dem hier beschriebenen Verfahren abgerechnet werden, und auf andere Verzeichnisse/Datenmengen, insbesondere kostenlose Informationen, unterscheiden zu können. In einem dritten Schntt werden die Verweise auf kostenpflichtige Verzeichnisse/Datenmengen schließlich so angepaßt bzw. umgeschrieben, daß der Benutzer den Inhalt dieser Verweise in der oben beschriebenen Weise nur unter Einbeziehung der Servereinrichtung 3 laden kann. Die Umschreibung der Hyperlink-Elemente kann vorzugsweise mittels der Umschreibeeinrichtung 23 oder einer weiteren Umschreibeeinrichtung (nicht dargestellt) ausgeführt werden.

Dabei gilt es, eine technische Besonderheit zu berücksichtigen, um eine reibungslose und besonders transparente Funktionsweise zu gewährleisten. Noch während die Servereinrichtung 3 die gewünschte Datenmenge von der Anbieter-Servereinrichtung 2 lädt, müssen Teile dieser Datenmenge nach der Bearbeitung, insbesondere dem Umschreiben der Hyperlink-Elemente, zum Benutzer-Computer 1 übertragen werden. Mit einem Verfahren und einer Vorrichtung, das (die) nach dem Prinzip "Datenmenge laden - Umschreiben der Verweise/Hyperlink-Elemente und sonstiger Informationen - Dokument senden" arbeiten würde, wären Echtzeitübertragungen nicht möglich. Der Benutzer müßte stets warten, bis die gesamte Datenmenge in der Servereinrichtung 3 verarbeitet wäre. Erst anschließend könnte die Übertragung an den Benutzer-Computer 1 erfolgen.

Aus diesem Grund arbeiten die drei Parser-Einrichtungen für die oben genannten Bearbeitungsschritte fliegend ("on the fly") bzw. in Echtzeit und können somit beliebig kleine Mengen der Datenmenge von der Anbieter-Servereinrichtung 2 laden und zum Benutzer-Computer 1 ausgeben. Hiermit wird der fortlaufende Datenfluß von der Anbieter-Servereinrichtung 2 zum Benutzer-Computer 1 über die Zwischenstufe Servereinrichtung 3 gewährleistet.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Übertragen einer elektronischen Datenmenge zwischen einer Anbieter-Servereinrichtung (2) und einem Benutzer-Computer (1), wobei die elektronische Datenmenge in der Anbieter-Servereinrichtung (2) von einem elektronischen Verzeichnis umfaßt und in dem Verzeichnis unter einem Bezeichner gespeichert ist, wobei dem elektronischen Verzeichnis eine Verbindungsadresse in einem die Anbieter-Servereinrichtung (2) und eine Servereinrichtung (3) umfassenden Netzwerk zugeordnet ist, so daß die elektronische Datenmenge in dem Netzwerk mittels einer die Verbindungsadresse und den Bezeichner umfassenden Datenmengenadresse elektronisch identifizierbar ist, das Verfahren die folgenden Verfahrensschritte aufweisend:
a) elektronisches Erfassen einer von einem Benutzer mittels einer Browsereinrichtung auf dem Benutzer-Computer (1) erzeugten Benutzeranforderung zum Abruf der elektronischen Datenmenge aus dem elektronischen Verzeichnis in der Anbieter-Servereinrichtung (2) mit Hilfe der Servereinrichtung (3);
b) automatisches Anfordern und Erfassen von Benutzerdaten zum Authentifizieren des Benutzers mit Hilfe der Servereinrichtung (3) und des Benutzer-Computers (1);
c) elektronisches Verarbeiten der erfaßten Benutzerdaten und der Information über die elektronisch erfaßte Benutzeranforderung in der Servereinrichtung (3) zum Autorisieren des Benutzers, derart, daß mit Hilfe von Freischaltinformation, die in der Servereinrichtung (3) gespeichert ist, automatisch geprüft wird, ob in der Servereinrichtung (3) für den mittels der erfaßten Benutzerdaten authentifizierten Benutzer eine Information über eine aktuelle Freischaltung für das elektronische Verzeichnis elektronisch gespeichert ist; und
d) wenigstens teilweises Übertragen der elektronischen Datenmenge aus dem elektronischen Verzeichnis von der Anbieter-Servereinrichtung (2) zur Servereinrichtung (3) und von der Servereinrichtung (3) zum Benutzer-Computer (1), wenn beim automatischen Prüfen gemäß Verfahrensschritt c) festgestellt wird, daß der authentifizierte Benutzer autorisiert ist,
wobei das Verfahren durch die folgenden weiteren Verfahrensschritte **gekennzeichnet** ist :
- syntaktisches Analysieren der elektronischen Datenmenge mittels der Servereinrichtung (3), um Hyperlink-Elemente elektronisch zu erfassen, die von der elektronischen Datenmenge umfaßt sind und die jeweils eine andere Datenmengenadresse aufweisen, die auf eine zugehörige Datenmenge in dem Netzwerk, insbesondere in der Anbieter-Servereinrichtung (2) verweisen;
- elektronisches Umschreiben der Datenmengenadresse eines der erfaßten Hyperlink-Elemente vor dem Übertragen eines Teils der elektronischen Datenmenge, welcher das eine Hyperlink-Element umfaßt, von der Servereinrichtung (3) zum Benutzer-Computer (1) gemäß Verfahrensschritt d), wenn beim elektronischen Überprüfen des einen Hyperlink-Elements festgestellt wird, daß die Datenmengenadresse des einen Hyperlink-Element innerhalb des elektronischen Verzeichnisses liegt, wobei das elektronische Umschreiben derart ausgeführt wird, daß eine umgeschriebene Datenmengenadresse des einen Hyperlink-Elements erzeugt wird, die auf die Servereinrichtung (3) verweist; und
- Speichern einer elektronischen Zuordnung zwischen der Datenmengenadresse des einen Hyperlink-Elements und der umgeschriebenen Datenmengenadresse des einen Hyperlink-Elements mittels der Servereinrichtung (3), so daß bei einer Benutzeranforderung zum Abruf der zur Datenmengenadresse des einen Hyperlink-Element gehörigen Datenmenge eine Übertragung der zugehörigen Datenmenge unter Einbeziehung der Servereinrichtung (3) gewährleistet ist.

2. Verfahren nach Anspruch 1, **dadurch gekennzeichnet, daß** in der Servereinrichtung (3) vor dem Übermitteln der elektronischen Datenmenge von der Servereinrichtung (3) zum Benutzer-Computer (1) eine temporäre Verbindungsadresse für das Verzeichnis automatisch erzeugt und der elektronischen Datenmenge zugeordnet wird, so daß die elektronische Datenmenge mit einer elektronisch umgeschriebenen Datenmengenadresse, die die temporäre Verbindungsadresse umfaßt, an den Benutzer-Computer (1) übermittelt wird.

3. Verfahren nach Anspruch 2, **dadurch gekennzeichnet, daß** die temporäre Verbindungsadresse einen temporären, der aktuellen Freischaltung elektronisch zugeordneten Parameter umfaßt.

4. Verfahren nach einem der vorangehenden Ansprüche, **dadurch gekennzeichnet, daß** das elektronische Speichern der aktuellen Freischaltung auf einen vorbestimmten Zeitraum begrenzt wird.

5. Verfahren nach einem der vorangehenden Ansprüche, das Verfahren die weiteren Verfahrensschritte umfassend:
- automatisches Anfordern einer Benutzereingabe zur elektronischen Erfassung einer Zahlungsbereitschaft mit Hilfe der Servereinrichtung (3) und des Benutzer-Computers (1), wenn beim elektronischen Verarbeiten der erfaßten Benutzerdaten und der Information über die elektronisch erfaßte Benutzeranforderung gemäß Verfahrensschritt c) festgestellt wird, daß in der Servereinrichtung (3) für den mittels der erfaßten Benutzerdaten authentifizierten Benutzer keine Information über die aktuelle Freischaltung für das elektronische Verzeichnis elektronisch gespeichert ist; und
- elektronisches Erfassen und Verarbeiten der angeforderten Benutzereingabe, derart, daß ein dem Benutzer zugeordneter elektronischer Kontostand automatisch angepaßt und die Information über die aktuelle Freischaltung für das elektronische Verzeichnis in der Servereinrichtung (3) gespeichert wird.

6. Verfahren nach einem der vorangehenden Ansprüche, **dadurch gekennzeichnet, daß** nach dem Authentifizieren des Benutzers gemäß Verfahrensschritt b) eine temporäre Identifizierungsdatei mittels der Servereinrichtung (3) elektronisch erzeugt und nach dem Übermitteln an den Benutzer-Computer (1) in einer Speichereinrichtung des Benutzer-Computers (1) gespeichert wird, und
daß nach einer von dem Benutzer mittels der Browsereinrichtung auf dem Benutzer-Computer (1) erzeugten, erneuten Benutzeranforderung zum Abruf der elektronischen Datenmenge oder einer anderen elektronischen Datenmenge aus dem elektronischen Verzeichnis in der Anbieter-Servereinrichtung (2) der Benutzer mittels der temporären Identifizierungsdatei erneut authentifiziert wird, ohne daß die Benutzerdaten angefordert und / oder erfaßt werden.

7. Verfahren nach den Ansprüchen 4 und 6, **dadurch gekennzeichnet, daß** nach dem erneuten Authentifizieren und einem hiernach Verfahrensschritt c) entsprechend ausgeführten, erneuten Autorisieren mittels der Servereinrichtung (3) eine verbleibende Zeitdauer der aktuellen Freischaltung automatisch ermittelt wird sowie eine Information über die verbleibende Zeitdauer elektronisch erzeugt und an den Benutzer-Computer (1) zur Ausgabe übertragen wird.

8. Verfahren nach Anspruch 6 oder 7, **dadurch gekennzeichnet, daß** die temporäre Identifizierungsdatei nach einem Schließen der Browsereinrichtung auf dem Benutzer-Computer (1) aus der Speichereinrichtung automatisch gelöscht wird.

9. Verfahren nach Anspruch 8, **dadurch gekennzeichnet, daß** das syntaktische Analysieren ausgeführt wird, während die elektronische Datenmenge wenigstens teilweise von der Anbieter-Servereinrichtung (2) zur Servereinrichtung (3) übertragen wird.

## Claims

1. A method of transmitting an electronic data set between a provider server (2) and a user computer (1), the electronic data set in the provider server (2) being included in an electronic directory and being stored in said directory under a designation, and a communication address in a network, which comprises the provider server (2) and a server means (3), being assigned to the electronic directory so that the electronic data set is electronically identifiable in the network by means of a data set address which comprises the communication address and the designation, said method comprising the following steps:
(a) electronically recording a user request generated by a user by means of a browser in the user computer (1) for retrieval of the electronic data set from the electronic directory in the provider server (2) by way of the server means (3);
(b) automatically requesting and recording user data for authentication of the user by way of the server means (3) and the user computer (1);
(c) electronically processing the user data recorded and the information about the electronically recorded user request in the server means (3) for authorizing the user such that it is checked automatically by means of release information stored in the server means (3) whether any information about a current release for the electronic directory is electronically stored in the server means (3) for the user authenticated by the user data recorded;
(d) at least partly transmitting the electronic data set of the electronic directory from the provider server (2) to the server means (3) and from the server means (3) to the user computer (1) if it is determined by the automatic checking according to method step (c) that the authenticated user is authorized;
wherein the method is **characterized by** the following further steps:
- syntactically analyzing the electronic data set by way of the server means (3) for electronically recording hyperlink elements which are included in the electronic data set and each comprise a different data set address pointing to an associated data set in the network, especially in the provider server (2);
- electronically rewriting the data set address of one of said hyperlink elements prior to transmission of a part of the electronic data set which includes the hyperlink element from the server means (3) to the user computer (1) according to method step (d) if it is determined in the electronic checking of the one hyperlink element that the data set address of the one hyperlink element lies within the electronic directory, the electronic rewriting being carried out such that a rewritten data set address of the one hyperlink element is generated which address points to the server means (3); and
- storing an electronic allocation between the data set address of the one hyperlink element and the rewritten data set address of the one hyperlink element by way of the server means (3) so that, upon a user request for retrieval of the data set belonging to the data set address of the one hyperlink element, transmission of the associated data set with involvement of the server means (3) is guaranteed.

2. The method as claimed in claim 1, **characterized in that** a temporary communication address for the directory is generated automatically in the server means (3) and assigned to the electronic data set prior to transmission of the electronic data set from the server means (3) to the user computer (1) so that the electronic data set is transmitted to the user computer (1) together with an electronically rewritten data set address which includes the temporary communication address.

3. The method as claimed in claim 2, **characterized in that** the temporary communication address includes a temporary parameter electronically assigned to the current release.

4. The method as claimed in any one of the preceding claims, **characterized in that** the electronic memorization of the current release is limited to a predetermined period of time.

5. The method as claimed in any one of the preceding claims, the method comprising the following further steps:
- automatically requesting a user input for electronically recording a readiness to pay by way of the server means (3) and the user computer (1) if it is determined in the electronic processing of the user data recorded and the information about the electronically recorded user request according to method step (c) that no information about the current release for the electronic directory is electronically stored in the server means (3) for the user authenticated by means of the user data recorded; and
- electronically recording and processing the requested user input such that an electronic account balance assigned to the user is adjusted automatically and the information about the current release for the electronic directory is stored in the server means (3).

6. The method as claimed in any one of the preceding claims, **characterized in that** a temporary identification file is generated electronically by the server means (3) upon authentication of the user according to method step (b) and is stored in a memory means of the user computer (1) after having been transmitted to the user computer (1), and
**in that**, after another user request for retrieval of the electronic data set or another electronic data set from the electronic directory in the provider server (2) was generated by the user by means of the browser in the user computer (1), the user is renewed authenticated by means of the temporary identification file, which does not require requesting nor recording of the user data.

7. The method as claimed in claims 4 and 6, **characterized in that**, after renewed authentication and subsequent renewed authorization by the server means (3) carried out according to method set (c), a remaining period of time of the current release is determined automatically and information about the remaining period of time is generated electronically and transmitted to the user computer (1) for output.

8. The method as claimed in claim 6 or 7, **characterized in that** the temporary identification file is erased automatically from the memory means upon closing of the browser in the user computer (1).

9. The method as claimed in claim 8, **characterized in that** the syntactic analyzing is carried out while the electronic data set is transmitted at least in part from the provider server (2) to the server means (3).

## Revendications

1. Procédé pour la transmission d'une quantité de données électroniques entre un dispositif serveur de fournisseur (2) et un ordinateur d'utilisateur (1), la quantité de données électroniques étant incluse dans le dispositif serveur de fournisseur (2) par un répertoire électronique et étant stockée dans le répertoire sous un identificateur, une adresse de liaison étant attribuée au répertoire électronique dans un réseau comprenant le dispositif serveur de fournisseur (2) et un dispositif serveur (3), de sorte que la quantité de données électroniques dans le réseau peut être identifiée de façon électronique au moyen d'une adresse de quantité de données comprenant l'adresse de liaison et d'identificateur, lequel procédé présente les étapes de procédé suivantes :
a) saisie électronique d'une demande d'utilisateur générée par un utilisateur au moyen d'un logiciel de navigation sur l'ordinateur d'utilisateur (1) pour l'appel de la quantité de données électroniques à partir du répertoire électronique dans le dispositif serveur de fournisseur (2) à l'aide du dispositif serveur (3) ;
b) demande et saisie automatiques de données utilisateur pour l'authentification de l'utilisateur à l'aide du dispositif serveur (3) et de l'ordinateur de l'utilisateur (1) ;
c) traitement électronique des données d'utilisateur saisies et de l'information sur la demande d'utilisateur saisie de façon électronique dans le dispositif serveur (3) pour l'autorisation de l'utilisateur, de telle sorte que, à l'aide de l'information de libération, qui est stockée dans le dispositif serveur (3), on vérifie automatiquement si une information relative à une libération actuelle pour le répertoire électronique est stockée de façon électronique dans le dispositif serveur (3) pour l'utilisateur authentifié au moyen des données d'utilisateur saisies ; et
d) transmission au moins partielle de la quantité de données électroniques provenant du répertoire électronique du dispositif serveur de fournisseur (2) au dispositif serveur (3) et du dispositif serveur (3) à l'ordinateur d'utilisateur (1), lorsque, lors de l'essai automatique selon l'étape de procédé c), on constate que l'utilisateur authentifié est autorisé,
le procédé étant **caractérisé par** les autres étapes de procédé suivantes :
■ analyse syntaxique de la quantité de données électroniques au moyen du dispositif serveur (3) pour saisir de façon électronique des éléments d'hyperlien qui sont englobés par la quantité de données électroniques et qui présentent chacun une autre adresse de quantité de données qui renvoie à une quantité de données spécifiques dans le réseau, en particulier dans le dispositif serveur de fournisseur (2) ;
■ transcription électronique de l'adresse de quantité de données de l'un des éléments d'hyperlien saisis avant la transmission d'une partie de la quantité de données électroniques, qui englobe l'élément d'hyperlien, du dispositif serveur (3) à l'ordinateur d'utilisateur (1) selon l'étape de procédé d), si l'on constate lors du contrôle électronique d'un élément d'hyperlien que l'adresse de quantité de données d'un élément d'hyperlien est disposée à l'intérieur du répertoire électronique, la transcription électronique étant exécutée de telle sorte qu'une adresse transcrite de quantité de données d'un élément d'hyperlien est générée, laquelle renvoie au dispositif serveur (3) ; et
■ stockage d'une attribution électronique entre l'adresse de quantité de données d'un élément d'hyperlien et l'adresse de quantité de données transcrite d'un élément d'hyperlien au moyen du dispositif serveur (3), de sorte que, lors d'une demande d'utilisateur pour appeler la quantité de données spécifique à l'adresse de quantité de données d'un élément d'hyperlien, une transmission de la quantité de données spécifiques avec l'intégration du dispositif serveur (3) est garantie.

2. Procédé selon la revendication 1, **caractérisé en ce que** dans le dispositif serveur (3), avant la transmission de la quantité de données électroniques du dispositif serveur (3) à l'ordinateur d'utilisateur (1), une adresse de liaison temporaire est générée automatiquement pour le répertoire et attribuée à la quantité de données électroniques, de sorte que la quantité de données électroniques est transmise avec une adresse de quantité de données transcrite de façon électronique, qui comprend une adresse de liaison temporaire, à l'ordinateur d'utilisateur (1).

3. Procédé selon la revendication 2, **caractérisé en ce que** l'adresse de liaison temporaire comprend un paramètre temporaire, attribué de façon électronique à la libération actuelle.

4. Procédé selon l'une quelconque des revendications précédentes, **caractérisé en ce que** le stockage électronique de la libération actuelle est limité à une période prédéfinie.

5. Procédé selon l'une quelconque des revendications précédentes, lequel procédé comprend les autres étapes de procédé suivantes :
■ demande automatique d'une entrée utilisateur pour la saisie électronique d'une disponibilité de paiement à l'aide du dispositif serveur (3) et de l'ordinateur d'utilisateur (1) si, lors du traitement électronique des données d'utilisateur saisies et de l'information relative à la demande d'utilisateur saisie de façon électronique selon l'étape de procédé c), on constate que, dans le dispositif serveur (3) et pour l'utilisateur authentifié au moyen des données d'utilisateur saisies, aucune information relative à la libération actuelle pour le répertoire électronique n'est stockée de façon électronique ; et
■ saisie et traitement électroniques de l'entrée d'utilisateur demandée de telle sorte qu'un état de compte électronique attribué à l'utilisateur est adapté automatiquement et que l'information concernant la libération actuelle pour le répertoire électronique est stockée dans le dispositif serveur (3).

6. Procédé selon l'une quelconque des revendications précédentes, **caractérisé en ce que**, après l'authentification de l'utilisateur selon l'étape de procédé b), un fichier d'identification temporaire est généré de façon électronique au moyen du dispositif serveur (3) et est stocké dans un dispositif de stockage de l'ordinateur d'utilisateur (1) après la transmission à l'ordinateur d'utilisateur (1), et
**en ce que**, après une demande de l'utilisateur renouvelée, générée par l'utilisateur au moyen du dispositif de logiciel de navigation sur l'ordinateur d'utilisateur (1), pour l'appel de la quantité de données électroniques ou d'une autre quantité de données électroniques provenant du répertoire électronique dans le dispositif serveur (2) du fournisseur, l'utilisateur est authentifié à nouveau au moyen du fichier d'identification temporaire, sans que les données d'utilisateur soient demandées et/ou saisies.

7. Procédé selon les revendications 4 à 6, **caractérisé en ce que**, après l'authentification renouvelée et une autorisation renouvelée et exécutée ensuite selon l'étape de procédé c) au moyen du dispositif serveur (3), un laps de temps restant de libération actuelle est déterminé automatiquement et une information sur la durée restante étant générée de façon électronique et transmise à l'ordinateur d'utilisateur (1) pour l'édition.

8. Procédé selon la revendication 6 ou 7, **caractérisé en ce que** le fichier d'identification temporaire est effacé après une fermeture du dispositif de logiciel de navigation sur l'ordinateur d'utilisateur (1) à partir du dispositif de stockage.

9. Procédé selon la revendication 8, **caractérisé en ce que** l'analyse syntaxique est exécutée, alors que la quantité de données électroniques est transmise au moins partiellement par le dispositif serveur de fournisseur (2) au dispositif serveur (3).
